# EUROPÄISCHE PATENTSCHRIFT

(11) **EP 3 746 315 B1**
(45) Veröffentlichungstag und Bekanntmachung des Hinweises auf die Patenterteilung: **14.06.2023**
(21) Anmeldenummer: 19701353.5
(22) Anmeldetag: 23.01.2019
(51) Int. Cl.: B60D 1/06, B60D 1/28, B60D 1/58

(54) **NIEDERHALTER**
DOWN-HOLDER
DISPOSITIF DE RETENUE

(30) Priorität: 31.01.2018 AT 500892018
(43) Veröffentlichungstag der Anmeldung: 09.12.2020
(73) Patentinhaber: Scharmüller, Josef, 4892 Fornach (AT); Scharmüller, Josef, jun., 4870 Vöcklamarkt (AT); Scharmüller, Christine, 4892 Fornach (AT)
(72) Erfinder: SCHARMÜLLER, Josef, 4892 Fornach (AT); SCHARMÜLLER, Josef, jun., 4870 Vöcklamarkt (AT); SCHARMÜLLER, Christine, 4892 Fornach (AT)
(74) Vertreter: Gibler & Poth Patentanwälte KG
(86) Internationale Anmeldenummer: PCT/EP2019/051591
(87) Internationale Veröffentlichungsnummer: WO 2019/149589

(56) Entgegenhaltungen:
- EP-A1- 1 995 085
- EP-A1- 2 343 201
- DE-A1-102004 045 252
- US-A- 4 291 893

## Beschreibung

Die Erfindung betrifft einen Niederhalter gemäß dem Oberbegriff des Patentanspruches 1.

Ein Niederhalter ist ein Teil einer Fahrzeugkupplung, wobei der Niederhalter die Kupplungspfanne einer Fahrzeugkupplung auf einer Kupplungskugel der Fahrzeugkupplung niederhält. Hierbei wird der Niederhalter in einer Niederhaltestellung arretiert, bei welcher der Niederhalter die, der Kupplungskugel abgewandte Seite der Kupplungspfanne kontaktiert. Für einen zuverlässigen und verschleißarmen Betrieb der als Kugelkupplung ausgebildeten Fahrzeugkupplung ist es notwendig, dass die Kupplungspfanne mit einem gewissen Spiel auf der Kupplungskugel aufliegt. Der Niederhalter weist dafür eine Einstellschraube mit einer Kontaktfläche auf, durch welche sich der Abstand zwischen der Kupplungskugel und der Kontaktfläche in einem vorgebbaren Bereich stufenlos eingestellt werden kann. Um die Einstellung der Einstellschraube für den Betrieb zu fixieren ist es bekannt, einen überstehenden Teil der Einstellschraube mit einer Kontermutter zu verspannen.

Durch diese Bauweise besteht ein erhöhter Platzbedarf, da es für die Fixierung mit der Kontermutter notwendig ist, dass die Einstellschraube deutlich aus dem restlichen Niederhalter hervorsteht.

Nachteilig daran ist, dass im Heckbereich eines Zugfahrzeuges der Platz üblicherweise sehr begrenzt ist, da hier oft viele verschiedene Kupplungsmöglichkeiten und Anschlüsse unterzubringen sind, und die Einbauten im Heckbereich daher möglichst platzsparend ausgebildet sein sollten. Durch die Kontermutter wird die Höhe des Niederhalters maßgeblich erhöht. Weiters bestehet bei der Kontermutter das Problem, dass zu deren Fixierung ein hoher Kraftbedarf notwendig ist, und dass bei einem unachtsamen Anziehen der Kontermutter die Einstellung der Einstellschraube verstellt werden kann.

Die US 4,291,893 A zeigt einen Niederhalter zum Niederhalten einer Kupplungspfanne einer Fahrzeugkupplung auf einer Kupplungskugel der Fahrzeugkupplung, wobei der Niederhalter einen Niederhaltergrundkörper mit einer Gewindebohrung aufweist, wobei in der Gewindebohrung eine Einstellschraube angeordnet ist, wobei die Einstellschraube eine Kontaktfläche zum Kontaktieren der Kupplungspfanne aufweist.

Die EP 2 343 201 A1 zeigt eine Anhängerkupplung für ein Zugfahrzeug umfassend eine Kupplungseinheit und eine Sicherungsvorrichtung, wobei die Kupplungseinheit relativ zu einem Grundkörper zwischen einer Kupplungsstellung und einer Lösestellung verstellbar ist, wobei die Sicherungsvorrichtung in einer Sicherungsstellung die Kupplungseinheit in der Kupplungsstellung sichert.

Die DE 10 2004 045 252 A1 zeigt eine automatische Kugelkupplung mit einem Kupplungsmaul und einem in dem Kupplungsmaul anhebbaren Kupplungsbolzen mit einer Kupplungskugel, sowie eine Hubgabel für den Kupplungsbolzen.

Die EP 1 995 085 A1 zeigt eine Niederhaltervorrichtung zum Halten einer Zugöse mit einem Befestigungselement zum Befestigen auf einer Grundplatte und/oder einem Grundrahmen, wobei an dem Befestigungselement eine Haltevorrichtung für eine Zwangslenkung angeordnet ist.

Die US 9 333 821 B1 zeigt einen Niederhalter zum Niederhalten einer Kupplungspfanne einer Fahrzeugkupplung auf einer Kupplungskugel der Fahrzeugkupplung, wobei der Niederhalter einen Niederhaltergrundkörper mit einer Gewindebohrung aufweist, wobei in der Gewindebohrung eine Einstellschraube angeordnet ist, wobei der Niederhalter eine seitlich angeordnete Schraube zum Einklemmen der Einstellschraube in der Gewindebohrung aufweist. Aufgabe der Erfindung ist es daher einen Niederhalter der eingangs genannten Art anzugeben, mit welchem die genannten Nachteile vermieden werden können, welcher platzsparrend ausgebildet ist aber dennoch einfach und zuverlässig eingestellt werden kann.

Erfindungsgemäß wird dies durch die Merkmale des Patentanspruches 1 erreicht.

Dadurch ergibt sich der Vorteil, dass der Niederhalter wesentlich niedriger gebaut werden kann, da ein Vorstehen der Einstellschraube aus dem Niederhaltergrundkörper nicht mehr notwendig ist. Durch die seitlich der Gewindebohrung angeordnete Klemmeinrichtung kann die benötigte Größe des Niederhalters verringert werden. Durch diese niedrigere Bauhöhe kann der durch Einbauten verbrauchte Raum im Heckbereich eines Zugfahrzeuges verringert werden, wodurch mehr Einbauten möglich sind, beziehungsweise Arbeiten im Heckbereich vereinfacht werden. Durch die fehlende Kontermutter verringert sich auch die Wahrscheinlichkeit, dass im Betrieb sich ein Kabel an dem Niederhalter verheddert. Weiter ermöglicht es die Klemmeinrichtung die Einstellschraube zu fixieren, ohne die Gefahr, dass die Einstellschraube dabei verstellt wird. Weiters muss bei der Form des Niederhaltergrundkörpers keine Anpressfläche für die Kontermutter um die Gewindebohrung mehr berücksichtigt werden, wodurch der Niederhaltergrundkörper kompakter ausgebildet werden kann.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welcher lediglich eine bevorzugte Ausführungsform beispielhaft dargestellt ist, näher beschrieben. Dabei zeigt:
Fig. 1 eine bevorzugte Ausführungsform des Niederhalters als axonometrische Darstellung;
Fig. 2 die bevorzugte Ausführungsform des Niederhalters in Vorderansicht;
Fig. 3 die bevorzugte Ausführungsform des Niederhalters in Draufsicht; und
Fig. 4 die bevorzugte Ausführungsform des Niederhalters in Seitenansicht.

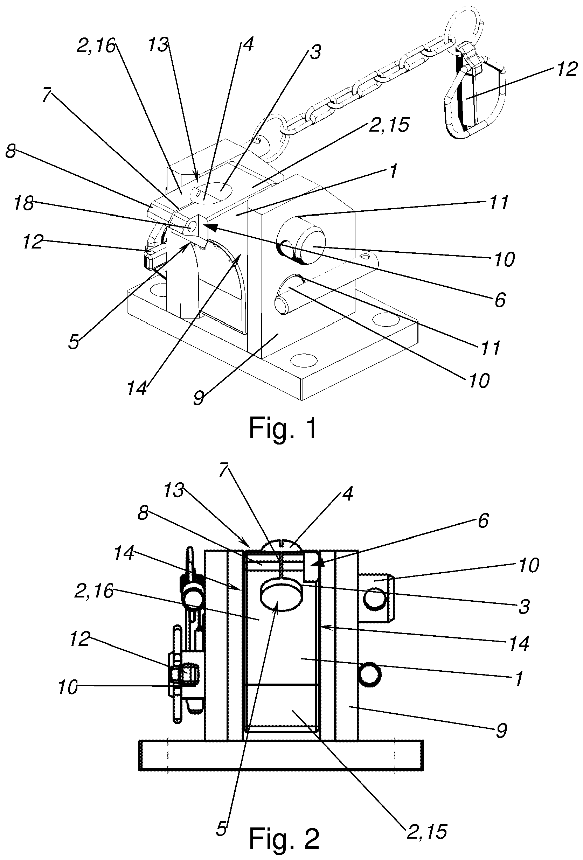

Die Fig. 1 bis 4 zeigen eine bevorzugte Ausführungsform Niederhalter 1 zum Niederhalten einer Kupplungspfanne einer Fahrzeugkupplung auf einer Kupplungskugel der Fahrzeugkupplung, wobei der Niederhalter 1 einen Niederhaltergrundkörper 2 mit einer Gewindebohrung 3 aufweist, wobei in der Gewindebohrung 3 eine Einstellschraube 4 angeordnet ist, wobei die Einstellschraube 4 eine Kontaktfläche 5 zum Kontaktieren der Kupplungspfanne aufweist. Ein Niederhalter 1 hält bei einer, als Kugelkupplung ausgebildeten Fahrzeugkupplung die Kupplungspfanne auf der Kupplungskugel. Der Niederhalter 1 kann dazu mit einer Niederhalterhalterung 9 des Kupplungsteils schwenkbar oder lösbar verbunden, wobei der Niederhalter 1 für den Betrieb in einer Niederhaltestellung arretiert wird.

Die Fahrzeugkupplung kann hierbei insbesondere eine Fahrzeugkupplung für den landwirtschaftlichen Bereich sein, also für einen Traktor und einen landwirtschaftlichen Anhänger.

Der Niederhalter 1 weist einen Niederhaltergrundkörper 2 mit einer Gewindebohrung 3 aufweist. Der Niederhaltergrundkörper 2 ist hierbei jener Grundkörper, welcher den Großteil des Niederhalters 1 ausmacht. Der Niederhaltergrundkörper 2 kann insbesondere einstückig sein. Weiters kann der Niederhaltergrundkörper 2 besonders bevorzugt ein Gussteil, insbesondere aus Gusseisen oder Stahl, sein. Die Gewindebohrung 3 ist ein Loch in dem Niederhaltergrundkörper 2, welches mit einem Innengewinde versehen ist. Die Gewindebohrung 3 kann insbesondere durch Bohren hergestellt werden. Es sind aber auch andere Herstellungsmethoden zur Herstellung Gewindebohrung 3 der denkbar wie Stanzen, Umformen oder ein Formguss.

In der Gewindebohrung 3 ist die Einstellschraube 4 angeordnet, welche vorgesehen ist als einziges Teil des Niederhalters 1 die Kupplungspfanne zu kontaktieren. Die Einstellschraube 4 kann insbesondere als Wurmschraube ausgebildet sein. Durch ein Drehen der Einstellschraube 4 kann der Abstand zwischen der Kontaktfläche 5 und der Kupplungskugel in der Niederhalterstellung stufenlos eingestellt. Dies ist erforderlich, um den Niederhalter 1 an die Dicke einer Kupplungspfanne anzupassen oder den Verschleiß an der Kontaktfläche 5 auszugleichen.

Vorgesehen ist, dass der Niederhalter 1 eine Klemmeinrichtung 6 zum Einklemmen der Einstellschraube 4 in der Gewindebohrung 3 aufweist, und dass die Klemmeinrichtung 6 seitlich der Gewindebohrung 3 angeordnet ist. Die Fixierung der Einstellschraube 4 erfolgt daher nicht durch eine Kontermutter direkt an der Einstellschraube 4, sondern durch ein seitliches Einklemmen der Einstellschraube 4 in der Gewindebohrung 3. Dieses Einklemmen kann beispielsweise durch ein Zusammenpressen des Innengewindes der Gewindebohrung 3 erfolgen und/oder durch eine direkte seitliche Aufbringung der Klemmkraft auf die Einstellschraube 4. Die seitliche Anordnung der Klemmeinrichtung 6 bezieht sich darauf, dass die Klemmeinrichtung 6 nicht wie eine Kontermutter in einer verlängerten Längsachse der Gewindebohrung 3 angeordnet ist, sondern seitlich der Gewindebohrung 3, beziehungsweise der Längsachse der Gewindebohrung 3. Insbesondere kann die Klemmeinrichtung 6 ausgebildet sein eine seitlich wirkende, insbesondere im Wesentlichen senkrecht zu der Längsachse der Gewindebohrung 3 wirkende, Klemmkraft auf die Einstellschraube 4 in der Gewindebohrung 3 auszuüben.

Dadurch ergibt sich der Vorteil, dass der Niederhalter 1 wesentlich niedriger gebaut werden kann, da ein Vorstehen der Einstellschraube 4 aus dem Niederhaltergrundkörper 2 nicht mehr notwendig ist. Durch die seitlich der Gewindebohrung 3 angeordnete Klemmeinrichtung 6 kann die benötigte Größe des Niederhalters 1 verringert werden. Durch diese niedrigere Bauhöhe kann der durch Einbauten verbrauchte Raum im Heckbereich eines Zugfahrzeuges verringert werden, wodurch mehr Einbauten möglich sind, beziehungsweise Arbeiten im Heckbereich vereinfacht werden. Durch die fehlende Kontermutter verringert sich auch die Wahrscheinlichkeit, dass im Betrieb sich ein Kabel an dem Niederhalter 1 verheddert. Weiter ermöglicht es die Klemmeinrichtung 6 die Einstellschraube 4 zu fixieren, ohne die Gefahr, dass die Einstellschraube 4 dabei verstellt wird. Weiters muss bei der Form des Niederhaltergrundkörpers 2 keine Anpressfläche für die Kontermutter um die Gewindebohrung 3 mehr berücksichtigt werden, wodurch der Niederhaltergrundkörper 2 kompakter ausgebildet werden kann.

Weiters ist ein Kupplungsteil einer Fahrzeugkupplung umfassend einen Niederhalter, eine Kupplungskugel und eine Niederhalterhalterung 9 vorgesehen. Der Mittelpunkt der Kupplungskugel kann insbesondere im Wesentlichen in einer Verlängerung der Längsachse der Gewindebohrung 3 angeordnet sind. Der Niederhalter 1 wirkt mit der Kupplungskugel zusammen, um die Kupplungspfanne auf der Kupplungskugel zu halten. Hierzu kann der Niederhalter 1 mit wenigstens einen Bolzen 10 mit der Niederhalterhalterung 9 in der Niederhaltestellung lagefest verbunden werden. In den Fig. 1 bis 4 ist der Niederhalter 1 mit der Niederhalterhalterung 9 in der Niederhaltestellung dargestellt. Die Niederhalterhalterung 9 kann an dem restlichen Kupplungsteil befestigt werden.

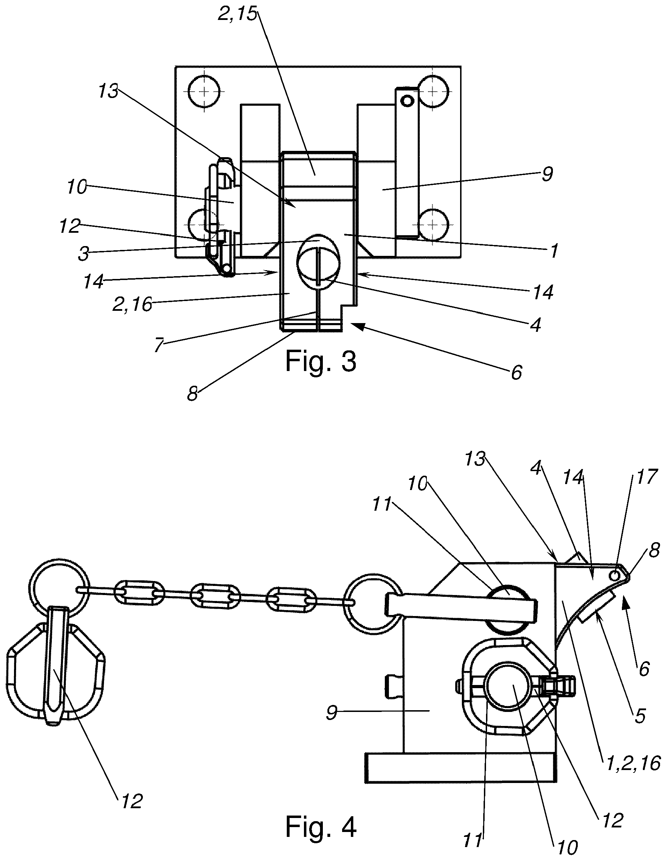

Der Niederhalter 1 und der Niederhalterhalterung 9 können insbesondere Bolzendurchführungsöffnungen 11 zur Aufnahme des wenigstens einen Bolzens 10 aufweisen. Die Bolzen 10 können insbesondere mittels eines Splints 12, bevorzugt eines Klappsplints, in den Bolzendurchführungsöffnungen 11 fixiert werden. In Fig. 3 ist der obere Bolzen 10 nicht dargestellt.

Der Niederhaltergrundkörper 2 kann insbesondere eine im Wesentlichen ebene Deckfläche 13 aufweisen, wobei bevorzugt die Längsachse der Gewindebohrung 3 schräg zu einem Normalvektor der Deckfläche 13 steht.

Weiters kann vorgesehen sein, dass der Niederhaltergrundkörper 2 zwei im Wesentlichen parallele und ebene Seitenflächen 14 aufweist.

Diese wesentlich kompaktere Bauform kann dadurch erreicht werden, dass keine Anpressfläche für eine Kontermutter notwendig ist.

Weiters kann vorgesehen sein, dass der Niederhaltergrundkörper 2 einen ersten Teil 15 aufweist, welcher in der Niederhaltestellung in der Niederhalterhalterung 9 angeordnet ist, und einen, am ersten Teil 15 angeformten und im Wesentlichen keilförmigen zweiten Teil 15 aufweist, wobei in dem zweiten Teil 15 die Gewindebohrung 3 angeordnet ist. Weiters kann vorgesehen sein, dass die Klemmeinrichtung 6 im zweiten Teil 15 des Niederhaltergrundkörpers 2 ausgebildet ist.

Der Kupplungsteil kann insbesondere an einem Zugfahrzeug befestigt sein.

Weiters ist eine Fahrzeugkupplung umfassend den Kupplungsteil und eine Kupplungspfanne vorgesehen. Die Kupplungspfanne weist eine Aufnahmepfanne mit einer teilsphärischen Innenfläche auf. Die Kupplungspfanne ist in einem angekuppelten Zustand der Fahrzeugkupplung auf der Kupplungskugel des Kupplungsteils aufgesetzt, wodurch eine um drei Achsen verschwenkbare Verbindung zwischen dem Kupplungsteil und der Kupplungspfanne entsteht. Die Kontaktfläche 5 der Einstellschraube ist in dem angekuppelten Zustand der Außenseite der Kupplungspfanne zugewandt.

Die Kupplungspfanne kann insbesondere an einem Anhänger befestigt sein.

Weiters ist ein Fahrzeuggespann umfassend diese Fahrzeugkupplung vorgesehen. Das Fahrzeuggespann umfasst insbesondere ein Zugfahrzeug mit dem Kupplungsteil, und ein Anhänger mit der Kupplungspfanne.

Besonders bevorzugt kann vorgesehen sein, dass die Gewindebohrung 3 wenigstens einen seitlichen Schlitz 7 aufweist, wobei der Schlitz 7 zwei Bereiche des Niederhaltergrundkörpers 2 voneinander trennt, und dass die Klemmeinrichtung 6 ausgebildet ist die beiden durch den Schlitz 7 getrennten Bereiche des Niederhaltergrundkörpers 2 vorgebbar zusammen zu drücken. Durch den Schlitz 7 ist ein Querschnitt der Gewindebohrung 3 leichter zu deformieren, so dass durch ein Zusammendrücken der beiden durch den Schlitz 7 getrennten Bereiche die Einstellschraube 4 in der Gewindebohrung 3 eingeklemmt, und dadurch fixiert wird.

Gemäß einer nicht dargestellten Ausführungsform kann der Schlitz 7 sich nur teilweise von der Gewindebohrung 3 in den Niederhaltergrundkörper 2 erstrecken, sodass die Gewindebohrung 3 mit dem Schlitz 7 komplett von dem Niederhaltergrundkörper 2 umschlossen wird.

Besonders bevorzugt kann vorgesehen sein, dass der wenigstens eine Schlitz 7 randoffen ist, und sich von der Gewindebohrung 3 bis zu einem freien Ende 8 des Niederhaltergrundkörpers 2 erstreckt. Das freie Ende 8 des Niederhaltergrundkörpers 2 kann insbesondere ein, dem Niederhalterhalterung 9 abgewandtes Ende des Niederhaltergrundkörpers 2 sein. Das freie Ende 8 ist insbesondere ein, dem ersten Teil 15 des Niederhaltergrundkörpers 2 abgewandtes Ende des zweiten Teils 16 des Niederhaltergrundkörpers 2. Dadurch ist der Schlitz 7 und die Gewindebohrung 3 mit wenig Kraft zusammendrückbar, wodurch die Klemmeinrichtung 6 ausgebildet sein kann und einfach zu betätigen ist.

Weiters kann vorgesehen sein, dass die Klemmeinrichtung 6 ein Klemmelement zur Erzeugung einer Klemmkraft aufweist. Das Klemmelement ist jener Teil der Klemmeinrichtung, durch dessen Betätigung die Klemmkraft vorgebbar aufgebracht und wieder entfernt werden kann. Das Klemmelement selber ist in den Fig. 1 bis 4 nicht dargestellt.

Besonders bevorzugt kann, dass das Klemmelement im Bereich des freien Endes 8 des Niederhaltergrundkörpers 2 angeordnet ist. Dadurch kann durch Ausnützung einer Hebelwirkung das Klemmelement mit wenig Kraftaufbringung des Klemmelementes eine hohe Klemmkraft erreicht werden.

Besonders bevorzugt kann vorgesehen sein, dass das Klemmelement eine Schraube ist.

Insbesondere kann vorgesehen sein, dass bei dem Schlitz 7 eine zweite Gewindebohrung 17 und eine, zur zweiten Gewindebohrung 17 fluchtende gewindelose Durchgangsöffnung 18 angeordnet sind, wobei die zweite Gewindebohrung 17 und die Durchgangsöffnung 18 durch den Schlitz 7 getrennt sind. Durch Einschrauben der Schraube in die zweite Gewindebohrung 17 durch die Durchgangsöffnung 18 kann der Spalt 7 vorgebbar zusammengedrückt werden. Bei der Durchgangsöffnung 18 kann eine Ausnehmung für den Schraubenkopf vorgesehen sein, damit der Schraubenkopf nicht über die Seitenfläche 14 hinausragt.

Alternativ zur Schraube kann vorgesehen sein, dass das Klemmelement ein Exzenter ist. Der Exzenter benötigt zwar mehr Platz al eine Schraube, kann aber im Gegensatz zu der Schraube auch werkzeuglos bedient werden.

Gemäß einer nicht dargestellten bevorzugten Ausführungsform kann vorgesehen sein, dass die zweite Gewindebohrung 17 normal oder schräg zu der Gewindebohrung 3 ist, und in die Gewindebohrung 3 mündet. Die Klemmwirkung der Klemmeinrichtung 6 entsteht hierbei nicht durch das Deformieren der Gewindebohrung 3, sondern indem eine Schraube direkt auf die Einstellschraube 4 drückt.

Es kann vorgesehen sein, dass die Klemmeinrichtung 6 mehrere Klemmelemente aufweist, welche insbesondere redundant zueinander wirken.

## Patentansprüche

1. Niederhalter (1) zum Niederhalten einer Kupplungspfanne einer Fahrzeugkupplung auf einer Kupplungskugel der Fahrzeugkupplung, wobei der Niederhalter (1) einen Niederhaltergrundkörper (2) mit einer Gewindebohrung (3) aufweist, wobei in der Gewindebohrung (3) eine Einstellschraube (4) angeordnet ist, wobei die Einstellschraube (4) eine Kontaktfläche (5) zum Kontaktieren der Kupplungspfanne aufweist, wobei der Niederhalter (1) eine Klemmeinrichtung (6) zum Einklemmen der Einstellschraube (4) in der Gewindebohrung (3) aufweist, wobei die Klemmeinrichtung (6) seitlich der Gewindebohrung (3) angeordnet ist, **dadurch gekennzeichnet, dass** die Gewindebohrung (3) wenigstens einen seitlichen Schlitz (7) aufweist, dass der Schlitz (7) zwei Bereiche des Niederhaltergrundkörpers (2) voneinander trennt, und dass die Klemmeinrichtung (6) ausgebildet ist die beiden durch den Schlitz (7) getrennten Bereiche des Niederhaltergrundkörpers (2) vorgebbar zusammen zu drücken.

2. Niederhalter (1) nach Anspruch 1, **dadurch gekennzeichnet, dass** der wenigstens eine Schlitz (7) randoffen ist, und sich von der Gewindebohrung (3) bis zu einem freien Ende (8) des Niederhaltergrundkörpers (2) erstreckt.

3. Niederhalter (1) nach einem der Anspruch 1 oder 2, **dadurch gekennzeichnet, dass** die Klemmeinrichtung (6) ein Klemmelement zur Erzeugung einer Klemmkraft aufweist.

4. Niederhalter (1) nach Anspruch 2 und 3, **dadurch gekennzeichnet, dass** das Klemmelement im Bereich des freien Endes (8) des Niederhaltergrundkörpers (2) angeordnet ist.

5. Niederhalter (1) nach Anspruch 4, **dadurch gekennzeichnet, dass** das Klemmelement eine Schraube ist.

6. Niederhalter (1) nach Anspruch 4, **dadurch gekennzeichnet, dass** Klemmelement ein Exzenter ist.

7. Kupplungsteil einer Fahrzeugkupplung umfassend einen Niederhalter (1) nach einem der Ansprüche 1 bis 6, eine Kupplungskugel und eine Niederhalterhalterung (9).

8. Fahrzeugkupplung umfassend ein Kupplungsteil nach Anspruch 7 und eine Kupplungspfanne.

9. Fahrzeuggespann umfassend eine Fahrzeugkupplung nach Anspruch 8.

## Claims

1. Down-holder (1) for holding down a coupling socket of a vehicle coupling on a coupling ball of the vehicle coupling, wherein the down-holder (1) has a down-holder main body (2) with a threaded bore (3), wherein an adjustment screw (4) is arranged in the threaded bore (3), wherein the adjustment screw (4) has a contact surface (5) for contacting the coupling socket, wherein the down-holder (1) has a clamping device (6) for clamping the adjustment screw (4) in the threaded bore (3), wherein the clamping device (6) is arranged laterally relative to the threaded bore (3), **characterized in that** the threaded bore (3) has at least one lateral slot (7), **in that** the slot (7) separates two regions of the down-holder main body (2) from one another, and **in that** the clamping device (6) is designed to press the two regions of the down-holder main body (2) separated by the slot (7) together in a predefinable manner.

2. Down-holder (1) according to claim 1, **characterized in that** the at least one slot (7) is open at the edge and extends from the threaded bore (3) to a free end (8) of the down-holder main body (2).

3. Down-holder (1) according to one of claims 1 or 2, **characterized in that** the clamping device (6) has a clamping element for generating a clamping force.

4. Down-holder (1) according to claims 2 and 3, **characterized in that** the clamping element is arranged in the region of the free end (8) of the down-holder main body (2).

5. Down-holder (1) according to claim 4, **characterized in that** the clamping element is a screw.

6. Down-holder (1) according to claim 4, **characterized in that** the clamping element is an eccentric.

7. Coupling part of a vehicle coupling, comprising a down-holder (1) according to one of claims 1 to 6, a coupling ball and a down-holder retainer (9).

8. Vehicle coupling comprising a coupling part according to claim 7 and a coupling socket.

9. Vehicle team comprising a vehicle coupling according to claim 8.

## Revendications

1. Dispositif presseur (1) pour presser un boîtier d'attache d'un attelage de véhicule sur une boule d'attelage de l'attelage de véhicule, lequel dispositif presseur (1) présente un corps de dispositif presseur (2) avec un trou fileté (3), une vis d'ajustement (4) étant disposée dans le trou fileté (3), laquelle vis d'ajustement (4) présente une surface de contact (5) pour venir en contact avec le boîtier d'attache, le dispositif presseur (1) présentant un dispositif de serrage (6) pour serrer la vis d'ajustement (4) dans le trou fileté (3), lequel dispositif de serrage (6) est disposé sur le côté du trou fileté (3), **caractérisé en ce que** le trou fileté (3) présente au moins une fente latérale (7), **en ce que** la fente (7) sépare deux zones du corps de dispositif presseur (2) l'une de l'autre et **en ce que** le dispositif de serrage (6) est conformé de façon à rapprocher d'une manière pouvant être prédéterminée les zones du corps de dispositif presseur (2) séparées par la fente (7).

2. Dispositif presseur (1) selon la revendication 1, **caractérisé en ce que** l'au moins une fente (7) est ouverte sur le bord et s'étend du trou fileté (3) jusqu'à une extrémité libre (8) du corps de dispositif presseur (2).

3. Dispositif presseur (1) selon l'une des revendications 1 ou 2, **caractérisé en ce que** le dispositif de serrage (6) présente un élément de serrage destiné à produire une force de serrage.

4. Dispositif presseur (1) selon les revendications 2 et 3, **caractérisé en ce que** l'élément de serrage est disposé dans la zone de l'extrémité libre (8) du corps de dispositif presseur (2).

5. Dispositif presseur (1) selon la revendication 4, **caractérisé en ce que** l'élément de serrage est une vis.

6. Dispositif presseur (1) selon la revendication 4, **caractérisé en ce que** l'élément de serrage est un excentrique.

7. Partie d'attelage d'un attelage de véhicule comprenant un dispositif presseur (1) selon l'une des revendications 1 à 6, une boule d'attelage et une fixation de dispositif presseur (9).

8. Attelage de véhicule comprenant une partie d'attelage selon la revendication 7 et un boîtier d'attache.

9. Véhicule attelé comprenant un attelage de véhicule selon la revendication 8.
